# EUROPEAN PATENT APPLICATION

(11) **EP 1 093 835 A1**
(43) Date of publication of application: **25.04.2001**
(21) Application number: 99303883.5
(22) Date of filing: 19.05.1999
(51) Int. Cl.: B01D 17/032

(54) **Liquid seperation**

(71) Applicant: Mettler-Toledo Myriad Ltd., Melbourn, Royston, Herts SG8 6DN (GB)
(72) Inventor: Homewood, Philip James c/o Mettler-Toledo Myriad, Hertfordshire, SG8 6DN (GB); Gilligan, Mark Peter Timothy c/o Mettler-Toledo, Hertfordshire, SG8 6DN (GB); Cassells, John Maclaren c/o Mettler-Toledo, Hertfordshire, SG8 6DN (GB)
(74) Representative: Haley, Stephen

(57) **Abstract**

A method of separating two immiscible liquids, the method comprising the steps of:
moving the two liquids into a separation chamber;
allowing the two liquids to settle;
moving the two liquids through a passageway containing a resistance detector, allowing one of the two liquids to be passed into a container; and
preventing further passage of liquid into the container when the resistance detector detects a change in resistance.

## Description

The present invention relates to a method and apparatus for detecting the boundary between and separating two immiscible liquids.

There are many liquid handling applications in which it is desirable to be able to separate immiscible liquids. Manual separation processes have been known for many years, but the process is relatively difficult to automate, particularly in cases where slowly separating liquids or more than two are to be separated.

One example of a field in which immiscible liquids may be separated is in combinatorial chemistry. In combinatorial chemistry many different compounds can be synthesized in automated processes which employ robots to transfer the agents and products between reaction vessels, storage vessels and waste vessels. The agents may be mixed together to produce a product. For example in solution chemistry solvents may be employed in order to separate one product from a mixture. With such an arrangement it is then necessary to separate the product and solvent from the remainder. In order to then separate the liquids, it is necessary to locate the position of the boundary and controllably dispense the two liquids into separate containers. It will be appreciated that, if the separation has to be performed manually, it can slow down considerably the automated synthesis process.

Various methods for automatically detecting the boundary between two immiscible liquids have been proposed. One approach is to employ optical methods, which rely on the different liquids having different absorption spectra. Such an approach can work well, but relies on the two liquids having differing spectra, which is sometimes not the case. Also, more often than not, it requires the provision of a source of ultraviolet light, under which the approach works best. Provision of an ultraviolet light source is expensive and unwieldy.

An alternative approach has been to determine differences in capacitance as the liquid boundary passes through detecting plates. This can be difficult to achieve in practice, however. Firstly, it is often necessary to produce a very thin (^{~}1 to 200µm) passageway or passageways with high surface area, through which the liquid pass during capacitance detection. Such a passageway is difficult to manufacture. If one or both liquids are volatile this type of detector can result in cavitation. Furthermore, the passageway or passageways can very easily become blocked and contaminated, and generally also disrupt the fluid boundary. A further problem is that capacitive techniques usually require the exposure of a metal element to the two liquids as they pass through the capacitance detector. This makes it extremely difficult to employ when either liquid is corrosive, limiting the applications in which such an approach can be used.

According to the present invention there is provided a method of separating two immiscible liquids, the method comprising the steps of:
moving the two liquids into a separation chamber;
allowing the two liquids to settle;
moving the two liquids through a passageway containing a resistance detector, allowing the lower of the two liquids to be passed into a container; and
preventing further passage of liquid into the container when the resistance detector detects a change in resistance.

The liquids may be moved into the separation chamber via the passageway containing the resistance detector.

The liquids may be filtered, so that any solid material is removed, prior to the passage of liquids into the first or the second container.

The step of moving the liquids through the resistance detector once settled may comprise the preliminary step of drawing a small portion of liquid into the resistance detector in order to wet it.

Once the passage of liquid into the first container has been prohibited passage of the remaining liquid into a second container may be performed.

The separation of the liquids may biased such that a small amount of one liquid is included in the sample of the other liquid so that there is no risk of contaminating one sample.

The movement of the two liquids into the separation chamber may be performed by downward movement of the separating chamber into a source of the two liquids whilst moving the liquids upward to reduce disturbance of the liquids.

According to the present invention there is also provided an apparatus for separating two immiscible liquids, the apparatus comprising:
means for moving the two liquids into a separating chamber, the separating chamber being configured to ensure that the two liquids can settle; and
a passageway leading from the separation chamber, the passageway containing a resistance detector for detecting the resistance of liquids as they pass through the passageway.

The apparatus may further comprise a valve arranged to be operated dependent upon the output of the resistance detector. The separation chamber may be tapered towards the passageway in order to ensure a well defined boundary between the two liquids.

The resistance detector may be connected to external circuitry which is capable of recognising the presence of air bubbles, e.g. by being configured to ignore a sudden change in resistance that corresponds to the resistance of an air bubble.

The resistance detector may be formed from solvent-resistant electrodes, formed from a material such as PTFE.

The separation chamber and resistance detector may be arranged so that they can be removably attached to the head of a robot arm. The chamber and/or detector may be arranged so that the robot arm can selectively pick up and put down these components.

A second resistance detector may be included, preferably in series, in order to provide verification of the boundary position.

By the provision of simple moving and settling steps, it is possible to ensure that first liquids are mixed and then separate properly to ensure that all product transfer has occurred. The provision of resistance detection ensures that a simple passageway that does not disturb the fluid boundary or generate any cavitation can be employed. In addition, it has a reduced surface area, compared to prior art capacitance based devices, thereby reducing the likelihood of contamination. It also ensures plug flow by provision of generally constant cross-section in the passageway.

One example of the present invention will now be described with reference to the accompanying drawings, in which:
Fig. 1 is a schematic diagram of an apparatus according to the present invention;
Fig. 2 is a diagram showing various stages during the performance of the method of the invention; and
Fig. 3 is a cross-sectional view of a resistance detector employed in the present invention.

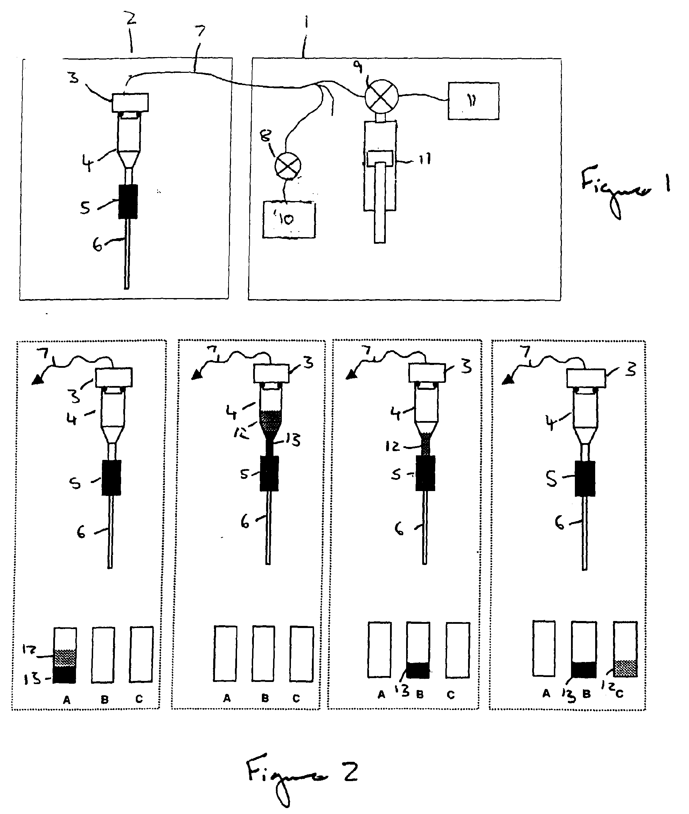

Referring to figure 1, a system performing the method of the invention and having components corresponding to the invention has a fixed section 1 and a moving section 2. The moving section 2 may be removably supported on a moving robot head 3. Because the moving section is removable it, or some of its components, may be provided as a disposable item. The system has a separating chamber 4 below which is positioned a resistance detection element 5 in a passageway 6. Connected to the separation chamber 4 is a supply tube 7 which is connected via valves 8, 9 to a supply of gas 10 and liquid and substance delivery devices 11. The separation chamber 4 is tapered and connects to the passageway 6.

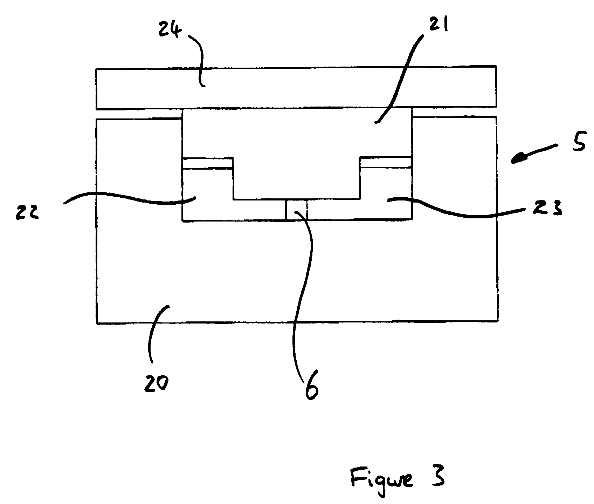

Figure 2 shows various stages in the operation of the system of figure 1. In a first stage two immiscible liquids 12, 13 are held in a vessel A, which may have been the location of a chemical reaction. The passageway 6, together with the rest of the components noted on the robot head 3 is moved above and then down into the vessel A. The two liquids 12, 13 are then drawn up into the separating chamber 4 via the passageway 6. This is performed by reducing the pressure in the supply 7. The system may be configured so that it draws the two liquids upwards as the passageway 6 moves downward. This reduces the amount of agitation between the two settle liquids 12, 13, reducing settling time. There are some instances, however, where increased mixing is preferable, as it provides an assurance that all product is in one of the two liquids.

The robot head is then positioned above a second vessel B and the two liquids 12, 13 allowed to settle. The settling time will, of course, be dependent upon the liquids being separated. After appropriate settling the pressure in the supply 7 is increased allowing liquid to pass through the resistance detector 5. It may be that a small amount of liquid is dispensed initially in order to wet the inside of the resistance detector 5 and ensure efficient measurement. Liquid is then dispensed into the second vessel B until the resistance detector 5 detects a change in resistance. The change may be either an increase or a decrease. The pressure in the supply 7 is then reduced in order to draw the remaining liquid 12 back up into the separation chamber 4. The robot head 3 is then moved above a third vessel C and the remaining liquid 12 dispensed into it.

Referring to Figure 3, a resistance detector 5 that may be employed with the invention has the passageway 6 formed in its central region. The passageway 6 is defined by first and second PCTFE regions 20, 21 and two carbon fibre-filled PTFE regions 22, 23. A resistance detector 5 is held together by screws (not shown) which passes through the first PCTFE region 20 and into a metal block 24. Each of the carbon fiber filled PTFE regions 22, 23 are connected to a respective electrical connector (not shown), which in turn are connected to external circuitry. The resistance detector is preferably driven by alternating current to prevent electrolysing the liquids.

Because the resistance detector 5 has a simple relatively large diameter straight passageway passing therethrough, the resistance detector 5 does not effect significantly the flow of the liquid 12, 13. Furthermore, because the resistance detector can be formed from PTFE it is resistant to corrosion by the liquids 12, 13, even if they are corrosive. It is preferable that there is a control of the resistance detector to prevent electrolysing the liquids.

## Claims

1. A method of separating two immiscible liquids, the method comprising the steps of:
moving the two liquids into a separation chamber;
allowing the two liquids to settle;
moving the two liquids through a passageway containing a resistance detector, allowing one of the two liquids to be passed into a container; and
preventing further passage of liquid into the container when the resistance detector detects a change in resistance.

2. A method according to claim 1, wherein the liquids are moved into the separation chamber via the passageway containing the resistance detector.

3. A method according to claim 1 or claim 2, wherein the step of moving the liquids through the resistance detector once settled comprises the preliminary step of moving a small portion of liquid into the resistance detector in order to wet it.

4. A method according to any of claims 1 to 3, wherein, once the passage of liquid into the first container has been prohibited, passage of the remaining liquid into a second container is performed.

5. A method according to any preceding claim, wherein the movement of the two liquids into the separation chamber is performed by downward movement of the separating chamber into a source of the two liquids whilst drawing the liquids upward.

6. An apparatus for separating two immiscible liquids, the apparatus comprising:
means for moving the two liquids into a separating chamber, the separating chamber being configured to ensure that the two liquids can settle; and
a passageway leading from the separation chamber, the passageway containing a resistance detector for detecting the resistance of liquids as they pass through the passageway.

7. An apparatus according to claim 6, further comprises a valve arranged to be operated dependent upon the output of the resistance detector.

8. An apparatus according to claim 6 or claim 7, wherein the separation chamber is tapered towards the passageway.

9. An apparatus according to claim 6, 7 or 8, wherein the resistance detector is formed from solvent resistant electrodes.

10. An apparatus according to any of claims 6 to 10, wherein the separation chamber and resistance detector are arranged so that they can be removably attached to the head of a robot arm.
